# NEUE EUROPÄISCHE PATENTSCHRIFT

(11) **EP 0 742 040 B2**
(45) Veröffentlichungstag und Bekanntmachung des Hinweises auf die Entscheidung über den Einspruch: **05.07.2006**
(45) Hinweis auf die Patenterteilung: 02.07.2003
(21) Anmeldenummer: 96106709.7
(22) Anmeldetag: 27.04.1996
(51) Int. Cl.: B01D 53/00, B01D 5/00, B01D 8/00

(54) **Verfahren und Vorrichtung zur Abgasreinigung mit Wärmeaustauschern**
Process and apparatus for waste gas cleaning using heat exchangers
Procédé et dispositif pour la purification de gaz d'échappement en utilisant des échangeurs de chaleur

(30) Priorität: 11.05.1995 DE 19517273
(43) Veröffentlichungstag der Anmeldung: 13.11.1996
(73) Patentinhaber: Air Liquide Deutschland GmbH, 40235 Düsseldorf (DE); Messer Group GmbH, 65843 Sulzbach (DE)
(72) Erfinder: Herzog, Friedhelm, Dr., 47799 Krefeld (DE); Kutz, Thomas, 41747 Viersen (DE); Sielschott, Werner, Dr., 41812 Erkelenz (DE); Thorwarth, Ulrich, 47807 Krefeld (DE)
(74) Vertreter: Kahlhöfer, Hermann

(56) Entgegenhaltungen:
- EP-A- 0 275 472
- EP-A- 0 553 706
- DE-A- 3 637 892
- FR-A- 2 572 304

## Beschreibung

Die Erfindung betrifft ein Verfahren zur Abgasreinigung mit Wärmeaustauschern sowie eine für die Durchführung des Verfahrens geeignete Vorrichtung.

Verunreinigungen können aus Gasen durch Kondensation oder Ausfrieren abgeschieden werden. Hierzu werden nach dem Stand der Technik Wärmeaustauscher eingesetzt, bei denen das zu reinigende Gas durch Kontakt mit Wärmeaustauscherflächen, welche verschiedenartig ausgestaltet sein können, in Kontakt gebracht wird. Die Wärmeaustauscherflächen sind dabei in der Regel in einem Winkel geneigt, damit das Kondensat bzw. sich beim, Auftauen verflüssigende Feststoffe, wie Eis, ablaufen können.

Vorzugsweise wird das zu reinigende Gas im Gegenstrom zum Kühlmittel geleitet. Als Kühlmedien werden bevorzugt tiefkalte Gase, wie flüssiger Stickstoff eingesetzt, welche mit der Wärmeaustauscherfläche in Berührung kommen und somit verdampfen. Eine Vorrichtung zum Kondensieren von Abgasen ist in der Zeitschrift "Gas aktuell" Nr. 46, Jahrgang 1993 auf Seite 4 beschrieben.
Die Verdampfung des Kühlmittels läßt sich am besten durchführen, wenn der Wärmeaustauscher Gefälle aufweist und das Kältemittel von unten eingespeist wird. Da man den Wärmetauscher vorteilhafterweise als Gegenströmer betreibt, ergibt sich für die Abgasführung zwangsläufig ein Strömungsweg mit Gefälle in Strömungsrichtung. Dadurch besteht die Gefahr, daß Kondensat den Wärmeaustausche durchläuft und an dessen Austritt das gereinigte Gas rekontaminiert. Ist die Temperatur der Wärmeaustauscherflächen so niedrig, daß die Verunreinigungen ausfrieren, so kann der Abgasweg schnell blockiert werden. Weiterhin läuft beim Abtauen der Anlage geschmolzenes Eis bzw. Desublimat stromabwärts und benetzt die Wände und Rohrleitungen. Bei erneuter Beaufschlagung der Anlage mit zu reinigendem Gas führt dies zu einer Anfahremission.

In den Druckschriften DE 36 37 892 A1, FR 2 572 304 A1 und EP- 0 275 472 A2 werden zur Abgasreinigung Kombinationen aus zwei Wärmetauschern beschrieben, wobei das zu reinigende Gas zunächst einen ersten Wärmetauscher in einer abwärts gerichteten Strömung und einen zweiten Wärmetauscher in einer Aufwärtsströmung durchläuft. Dadurch sammelt sich ausfrierendes Kondensat im Bereich zwischen den Wärmetauschern und kann dort leicht entsorgt werden.

Bei diesen Konstruktionen kann jedoch nicht verhindert werden, dass Kondensat in erheblichem Umfang mit dem Gasstrom mitgerissen wird und es so zu einer Kontamination des gereinigten Gases kommt.

Der Erfindung liegt daher die Aufgabe zugrunde, ein Verfahren und eine Vorrichtung zu schaffen, mit denen eine Rekontamination des gereinigten Gases, eine Anfahremission, sowie ein zu schnelles Blockieren des Abgasweges durch Ausfrieren von Verunreinigungen verhindert werden können.

Die Aufgabe ist erfindungsgemäß gelöst mit den im Anspruch 1 angegebenen Merkmalen.

Mit dem erfindungsgemäßen Verfahren und der Vorrichtung ist es nunmehr möglich, Rekontamination von gereinigtem Gas und Anfahremissionen zu verhindem, sowie ein Blockieren der Gaswege durch Ausfrieren der Verunreinigungen zu vermindern oder sogar auszuschließen.

Vorteilhafte Weiterbildungen sind in den Unteransprüchen angegeben.

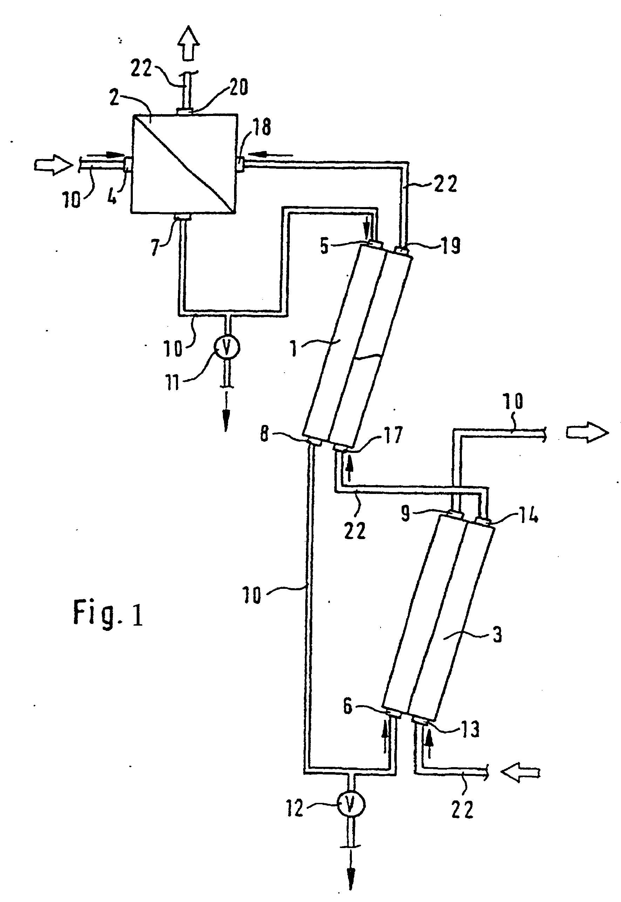

Die Zeichnung (Fig. 1) veranschaulicht eine Vorrichtung zur Durchführung des erfindungsgemäßen Verfahrens in schematischer Form.

Figur 1 zeigt einen ersten Wärmetauscher 1, dem ein Kühler 2 vorgeschaltet und ein zweiter Wärmetauscher 3 nachgeschaltet ist. Die Wärmetauscher 1 und 3, sowie der Kühler 2 sind durch die Eingangsstutzen 4,5 und 6, sowie die Ausgangsstutzen 7,8 und 9 über die Rohrleitung 10 miteinander verbunden, durch die das zu reinigende Gas geleitet wird. In der Rohrleitung 10 befinden sich die Ablaßventile 11 und 12 für Kondensate. Der Wärmeaustauscher 3 steht über einen Eintrittstutzen 13 und einen Austrittsstutzen 14 mit der Rohrleitung 22 in Verbindung. Der Wärmeaustauscher 1 und der Kühler 2 sind über die Eintrittstutzen 17 und 18 und die Austrittstutzen 19 und 20 gleichfalls an die Leitung 22 angeschlossen.

Im folgenden soll das erfindungsgemäße Verfahren anhand der Reinigung eines mit Methylchlorid beladenen Gases beispielhaft erläutert werden. Das zu reinigende Gas wird, wie in Figur 1 dargestellt, über die Rohrleitung 10 in einander folgenden Schritten dem Kühler 2, dem Wärmeaustauscher 1 und dem Wärmeaustauscher 3 derartzugeführt, daß in dem Wärmeaustauscher 1 eine nach unten gerichtete Strömung des zu reinigenden Gases entsteht. Die Zuleitung des den Wärmetaustauscher 1 verlassenden Gases in den Wärmeaustauscher 3 erfolgt durch die Rohrleitung 10 so, daß im Wärmeaustauscher 3 eine aufwärtsgerichtete Gasströmung entsteht, welche den Wärmeaustauscher 3 am oberen Ende wieder verläßt. Der Wärmeaustauscher 3 wird durch die Rohrleitung 15 über den Eingangsstutzen 13 mit flüssigem Stickstoff als Kühlmittel versorgt. Der im Wärmeaustauscher 3 verdampfende Stickstoff verläßt den Wärmeaustauscher 3 über die Rohrleitung 22. Der Wärmeaustauscher 1 wird durch die Rohrleitung 22 über den Eintrittsstutzen 17 mit flüssigem Stickstoff aus dem Wärmeaustauscher 3 als Kühlmittel gespeist. Der durch den Wärmeaustausch mit dem zu kühlenden Gas verdampfende flüssige Stickstoff wird durch die Rohrleitung 22 dem Kühler 2 zugeführt. Von dort aus kann der Stickstoff als Inertisierungsgas einem weiteren Prozeß zugeführt werden.

Bei Betrieb des erfindungsgemäßen Verfahrens wird nun das mit Methylchlorid beladene Gas im Kühler 2 durch den im Wärmeaustauscher 1 verdampften Stickstoff vorgekühlt und über die Rohrleitung 10 dem Wärmeaustauscher 1 zugeführt. Bei der Vorkühlung auskondensierende Verunreinigungen können über das Ventil 11 aus der Vorrichtung entfernt werden. Die Einspeisung des flüssigen Stickstoffes als Kühlmittel erfolgt im Wärmeaustauscher 1 vorzugsweise von unten, da somit ein definierter Füllstand und damit verbunden eine gut regulierbare Kühlkapazität erreicht werden kann. Weiterhin kann der flüssige Stickstoff im Wärmeaustauscher 1 unter Druck stehen, damit die Gasphase, welche die Vorrichtung über den Kühler 2 verläßt, einem weiteren, hier nicht dargestellten Verbraucher zugeführt werden kann. Um ein optimales Abkühlen des methylchloridhaltigen Gases zu gewährleisten, wird man den zu reinigenden Gasstrom unter diesen Verfahrensbedingungen in einer abwärtsgerichteten Strömung durch dem Wärmeaustauscher 1 leiten, jedoch sind auch andere Ausführungsformen denkbar, bei denen das zu reinigende Gas von unten und das Kühlmittel von oben in den Wärmeaustauscher 1 eingeleitet werden. Diese Ausführungsformen sind jedoch weniger bevorzugt. Wird nun das mit Methylchlorid beladene Gas in einer abwärts gerichteten Strömung durch den Wärmeaustauscher 1 geleitet, so wird bei idealer Prozeßführung der überwiegende Teil an Methylchlorid auskondensieren und sich am Boden des Wärmeaustauschers 1 ansammeln. In die Leitung 10 ablaufendes Kondensat kann durch das Ventil 12 aus der Anlage entfernt werden. Bei dieser Prozeßführung kann der zu reinigende Gasstrom durch die gleichgerichtete Strömung von zu reinigendem Gas und Kondensat rekontaminiert werden.

Befinden sich im Gasstrom zusätzlich Komponenten, die aufgrund relativ hoher Schmelzpunkte ausfrieren, so kann der Gasstom insbesondere am unteren Ende des Wärmeaustauschers 1 verengt werden. Man kann daher die Kühlleistung des Wärmeaustauschers 1 so anpassen, daß ein Ausfrieren nicht erfolgt. Dies kann durch die Wahl der richtigen Füllhöhe des flüssigen Stickstoffes, sowie durch Druckerhöhung auf der Kühlmittelseite des Wärmeaustauschers 1 erreicht werden. Eine Rekontamination wird erfindungsgemäß dadurch verhindert, daß der im Wärmeaustauscher 1 im wesentlichen vorgereinigte Gasstom dem Wärmeaustauscher 3 über den Eingangsstutzen 6 von unten zugeführt wird. Hierdurch entsteht eine aufwärtsgerichtete Strömung des zu reinigenden Gases, welche automatisch im Gegenstrom zum Rückfluß des sich bildenden Kondensates verläuft. Als aufwärtsgerichtete Strömung im Sinne der Erfindung ist jeder Strömungswinkel gegen die Horizontale zu verstehen, welcher ein im wesenetlichen selbständigen Ablauf der Kondensate ermöglicht. Eine Rekontamination wird somit verhindert. Natürlich findet bei entsprechender Zusammensetzung des zu reinigenden Gasstromes und tiefen Temperaturen des Wärmeaustauschers 3 auch ein Ausfrieren von Fremdkomponenten statt. In der Praxis und in Abhängigkeit von der Zusammensetzung der Verunreinigung des zu reinigenden Gases werden insbesondere in den Wärmeaustauschern 1 und 3 alle Phasenübergänge, wie gasförmig/flüssig, gasförmig/fest, dampfförmig/flüssig, dampfförmig/fest möglich sein. Die Versorgung des Wärmeaustauschers 3 durch flüssigen Stickstoff erfolgt genau wie für den Wärmeaustauscher 1 vorzugsweise von unten, so daß sich eine Kühlflüssigkeitssäule einer einstellbaren Füllhöhe ergibt. Das den Wärmeaustauscher 3 verlassende Gas ist nahezu frei von Kontaminationen und kann der Umwelt zugeführt werden. Durch eine entsprechende Auslegung der Apparate kann das Temperaturprofil des Kühlverlaufes individuell an das jeweilige Gasreinigungsproblem angepaßt werden.

Bei der in Figur 2 gezeigten Ausführungsform wird der flüssige Stickstoff in einem durchgängigen Strom durch die Rohrleitung 22 dem Wärmetaustauscher 3, dem Wärmeaustauscher sowie dem Kühler 2 zugeführt. Der Flüssigkeitsspiegel des flüssigen Stickstoffes kann für die gesamte Vorrichtung eingestellt werden und wird sich in der Regel im Wärmeaustauscher 1 befinden. Bei dieser Ausführungsform weisen die Kühlmittelseiten der Wärmeaustauscher 3 und 1 keine Druckdifferenzen auf. Selbstverständlich kann das erfindungsgemäße Verfahren auch mit anderen Kühlmitteln, wie beispielsweise FCKW sowie gasförmigem Kühlmittel, wie Stickstoffgas, betrieben werden. Es ist auch möglich, anstelle des Wärmeaustauschers 1 eine Serie von mehreren Wärmeaustauschem 1a, 1b, 1c usw. zu setzen. Auch ist es denkbar, große Wärmeaustauscher 1 oder eine Anordnung von seriell oder parallel geschalteten Wärmeaustauschern 1a, 1b, 1c usw. mehreren Wärmeaustauschern 3a, 3b,3c usw. zuzuführen. Bei kontinuierlichem Betrieb des Wärmeaustauschers 1 können die Wärmeaustauscher 3a, 3b, und 3c wechselweise aufgetaut werden. Mit dem erfindungsgemäßen Verfahren können Rekontaminationen des gereinigeten Gases und ein zu schnelles Zufrieren der Gaswege in der Vorrichtung verhindert werden. Bei erneuter Inbetriebnahme können Anfahremissionen verhindert werden.

## Patentansprüche

1. , Verfahren zum Kondensieren von leicht flüchtigen, gasförmigen Substanzen aus einem Prozessgas, bei dem das zu reinigende Prozessgas in mindestens einem ersten Wärmetauscher (1) durch Kondensation und/oder Ausfrieren von dampf- und/oder gasförmigen Verunreinigungen, nämlich Methylchlorid, im Gegenstrom mit einem Kühlmittel gereinigt und das auf diese Weise vorgereinigte Prozessgas einem zweiten Wärmtetauscher(3) derart zugeführt wird, dass es in einer aufwärtsgerichteten Strömüng mit einer Wärmeaustauschfläche des zweiten Wärmetauschers (3) in Kontakt gebracht wird, in welchem zweiten Wärmetauscher (3) das Kühlmittel im Gleichstrom mit dem zu reinigenden Prozessgas geführt wird, wobei das Kühlmittel aus dem zweiten Wännetauscher (3) an dessen oberem Ende austritt und in den ersten Wärmetauscher (1) geleitet wird.

2. Verfahren nach Anspruch 1, **dadurch gekennzeichnet, dass** das zu reinigende Prozessgas in Form eines abwärtsgerichteten Gasstromes durch den ersten Wärmetauscher geführt wird.

3. Verfahren nach einem der Ansprüche 1 oder 2, **dadurch gekennzeichnet, dass** zur Abscheidung der dampf- undloder gasförmigen Verunreinigungen mit flüssigem Stickstoff als Kühlmittel gekühlt wird.

4. Verfahren nach einem der Ansprüche 1 bis 3, **dadurch gekennzeichnet ,dass** die Kühlleistung des ersten Wärmetauschers (1) derart an die stoffliche Zusammensetzung der Verunreinigungen des zu reinigenden Prozessgases angepasst wird, dass die Verunreinigungen mindestens überwiegend auskondensieren.

5. Verfahren nach einem der Ansprüche 1 bis 4, **dadurch gekennzeichnet, dass** die Kühlleistung des zweiten Wärmetauschers (3) derart an die stoffliche Zusammensetzung der Verunreinigungen des zu reinigenden Prozessgases angepasst wird, dass die Verunreinigungen mindestens überwiegend ausfrieren.

6. Vorrichtung zur Durchführung des Verfahrens nach einem der vorhergehenden Ansprüche, mit mindestens einem ersten, im wesentlichen vertikal angeordneten Wärmetauscher (1), der an seinem oberen Ende einen Eingangsstutzen (5) für ein zu reinigendes Prozessgas sowie einen Austrittsstutzen (19) für ein Kühlmittel aufweist und an seinem unteren Ende einen Ausgangsstutzen (8) für das zu reinigendes Prozessgas sowie einen Eintrittsstutzen (17) für das Kühlmittel aufweist, und mit einem zweiten im wesentlichen vertikal angeordneten Wärmetauscher (3), der an seinem unteren Ende einen Eingangsstutzen (6) für das gereinigte Prozessgas sowie einen Eintrittsstutzen (13) für das Kühlmittel aufweist und an seinem oberen Ende einen Ausgangsstutzen für das gereinigte Prozessgas sowie einen Austrittsstutzen (14) für das Kühlmittel aufweist, wobei der Ausgangsstutzen (8) für das Prozessgas des ersten Wärmetauschers mit dem Eingangsstutzen (6) für das Prozessgas des zweiten Wärmetauschers und der Austrittsstutzen (14) für das Kühlmittel des zweiten Wärmetauschers mit dem Eintrittsstutzen (17) für das Kühlmittel des ersten Wärmetauschers (1) strömungsverbunden ist.

## Claims

1. Method for condensing highly volatile, gaseous substances out of a process gas, in which the process gas which is to be purified, in at least one first heat exchanger (1), is purified in countercurrent with respect to a coolant by condensation and/or freezing of impurities in vapour and/or gas form, namely methyl chloride, and the process gas which has undergone preliminary purification in this way is fed to a second heat exchanger (3) in such a manner that, in an upwardly directed flow, it is brought into contact with a heat exchange surface of the second heat exchanger (3), in which second heat exchanger (3) the coolant is passed in co-current with the process gas to be purified, the coolant leaving the second heat exchanger (3) at its upper end and being passed into the first heat exchanger (1).

2. Method according to Claim 1, **characterized in that** the process gas which is to be purified is passed through the first heat exchanger in the form of a downwardly directed gas stream.

3. Method according to either of Claims 1 and 2, **characterized in that**, to separate off the impurities in vapour and/or gas form, cooling is carried out using liquid nitrogen as coolant.

4. Method according to one of Claims 1 to 3, **characterized in that** the cooling capacity of the first heat exchanger (1) is matched to the composition of the impurities of the process gas to be purified in such a manner that the impurities at least predominantly condense out.

5. Method according to one of Claims 1 to 4, **characterized in that** the cooling capacity of the second heat exchanger (3) is matched to the composition of the impurities of the process gas to be purified in such a manner that the impurities at least predominantly freeze out.

6. Device for carrying out the method according to one of the preceding claims, having at least one first, substantially vertically arranged heat exchanger (1), which, at its upper end, has an entry connection piece (5) for a process gas which is to be purified and an outlet connection piece (19) for a coolant and, at its lower end, has an exit connection piece (8) for the process gas which is to be purified and an inlet connection piece (17) for the coolant, and having a second, substantially vertically arranged heat exchanger (3), which, at its lower end, has an entry connection piece (6) for the purified process gas and an inlet connection piece (13) for the coolant and, at its upper end, has an exit connection piece for the purified process gas and an outlet connection piece (14) for the coolant, the exit connection piece (8) for the process gas of the first heat exchanger being flow-connected to the entry connection piece (6) for the process gas of the second heat exchanger, and the outlet connection piece (14) for the coolant of the second heat exchanger being flow-connected to the inlet connection piece (17) for the coolant of the first heat exchanger (1).

## Revendications

1. Procédé de condensation de substances gazeuses facilement volatiles, à partir d'un gaz industriel, selon lequel on nettoie le gaz industriel à nettoyer dans au moins un premier échangeur de chaleur (1) par condensation et/ou congélation des impuretés à l'état de vapeur et/ou de gaz, à savoir du chlorure de méthyle, par un échange à contre-courant avec un agent frigorifique, et on fournit le gaz ainsi pré-nettoyé à un second échangeur de chaleur (3) de façon à être mis en contact par un écoulement ascendant avec une surface d'échange de chaleur d'un second échangeur de chaleur (3), dans lequel second échangeur de chaleur (3) l'agent frigorifique est conduit en courant parallèle, l'agent frigorifique quittant le second échangeur de chaleur (3) à son extrémité supérieure et étant guidé dans le premier échangeur de chaleur (1).

2. Procédé selon la revendication 1,
**caractérisé en ce que**
le gaz industriel à nettoyer est conduit sous la forme d'une veine de gaz descendante à travers le premier échangeur de chaleur.

3. Procédé selon l'une des revendications 1 ou 2,
**caractérisé en ce que**
pour séparer les impuretés à l'état de vapeur et/ou de gaz on refroidit avec de l'azote liquide comme agent frigorifique.

4. Procédé selon l'une des revendications 1 à 3,
**caractérisé en ce que**
la puissance frigorifique du premier échangeur de chaleur (1) est adaptée à la composition de matière des impuretés du gaz industriel à nettoyer pour que les impuretés se séparent principalement par condensation.

5. Procédé selon l'une des revendications 1 à 4,
**caractérisé en ce que**
la puissance frigorifique du second échangeur de chaleur (3) est adaptée à la composition de matière des impuretés du gaz industriel à nettoyer pour que les impuretés se séparent principalement par congélation.

6. Dispositif pour la mise en oeuvre du procédé selon l'une des revendications précédentes, comportant au moins un premier échangeur de chaleur (1) essentiellement vertical, dont l'extrémité supérieure comporte un ajutage d'entrée (5) pour le gaz industriel à nettoyer ainsi qu'un ajutage de sortie (19) pour un agent frigorifique et dont l'extrémité inférieure comporte un ajutage de sortie (8) pour le gaz de procédé à nettoyer ainsi qu'un ajutage d'entrée (17) pour l'agent frigorifique, et un second échangeur de chaleur (3) essentiellement vertical, dont l'extrémité inférieure comporte un ajutage d'entrée (6) pour le gaz de procédé à nettoyer et un ajutage d'entrée (13) pour l'agent frigorifique et dont l'extrémité supérieure comporte un ajutage de sortie pour le gaz de procédé à nettoyer et un ajutage de sortie (14) pour l'agent frigorifique,
dans lequel
l'ajutage de sortie (8) du gaz industriel du premier échangeur de chaleur est relié à l'ajutage d'entrée (6) du gaz industriel du second échangeur de chaleur, et l'ajutage de sortie (14) de l'agent frigorifique du second échangeur de chaleur est relié à l'ajutage d'entrée (17) de l'agent frigorifique du premier échangeur de chaleur (1).
